# EUROPEAN PATENT SPECIFICATION

(11) **EP 2 700 323 B1**
(45) Date of publication and mention of the grant of the patent: **22.07.2020**
(21) Application number: 12181045.1
(22) Date of filing: 20.08.2012
(51) Int. Cl.: A23L 2/58, A23L 2/68, A23L 2/02, A23B 7/10

(54) **Beverage product containing anthocyanins and method for the preparation thereof**
Getränkeprodukt mit Anthocyaninen und Herstellungsverfahren dafür
Produit de boisson contenant des anthocyanines et son procédé de préparation

(43) Date of publication of application: 26.02.2014
(73) Proprietor: Purac Biochem N.V., 4206 AC Gorinchem (NL)
(72) Inventor: van Houwelingen - de Jong, Dirkje, 4206 AC Gorinchem (NL); Evers, Inge, 4206 AC Gorinchem (NL); van Arendonk, Willy Gijsberta Cornelia, 4206 AC Gorinchem (NL); Edelman, Marijke Willemien, 4206 AC Gorinchem (NL)
(74) Representative: Nederlandsch Octrooibureau

(56) References cited:
- US-A1- 2003 138 531
- US-A1- 2004 161 496
- US-A1- 2008 233 266
- NORIAKI SAIGUSA ET AL: "Maintaining the Anthocyanin Content and Improvement of the Aroma of an Alcoholic Fermented Beverage Produced from Raw Purple-Fleshed Sweet Potato", FOOD SCIENCE AND TECHNOLOGY RESEARCH, vol. 13, no. 1, 5 October 2007 (2007-10-05), pages 23-27, XP055058413, ISSN: 1344-6606, DOI: 10.3136/fstr.13.23

## Description

### TECHNICAL FIELD OF THE INVENTION

The present invention and disclosures relates to a method of preparing an acidified beverage product. More particularly, the invention and disclosures relates to a method of preparing a beverage product having a pH of less than 5.0 and having the following *Lab* colour space coordinate values: 20≤L*≤95; a*≥0; b*≥-10, said method comprising combining a juice component, a lactic acid component, water and optionally one or more other food-grade ingredients, wherein:
- the juice component is applied in a concentration of 0.05-99% by weight of the beverage product, said juice component providing 0.1-50 g monosaccharides per liter of beverage product and at least 10 mg anthocyanins per liter of beverage product; and
- the lactic acid component is applied in a concentration that provides 0.05-20 g lactic acid per liter of beverage product.

The invention and disclosures further provides a beverage product having a water content of at least 80 wt.% and a pH of less than 5.0, said beverage product containing:
- 0.1-50 g/l monosaccharides;
- at least 10 mg/l of anthocyanins;
- 0.05-20 g/l lactic acid; and
- optional other food-grade ingredients;
wherein the beverage product has the following *Lab* colour space coordinate values: 20≤L*≤95; a*≥0; b*≥-10. The scope of the invention is defined by the claims.

### BACKGROUND OF THE INVENTION

Anthocyanins (also anthocyans) are water-soluble vacuolar pigments that may appear red, purple, or blue depending on the pH. Anthocyanins occur in all tissues of higher plants, including leaves, stems, roots, flowers, and fruits.

In flowers, bright-reds and -purples are adaptive for attracting pollinators. In fruits, the colorful skins also attract the attention of animals, which may eat the fruits and disperse the seeds. In photosynthetic tissues (such as leaves and sometimes stems), anthocyanins have been shown to act as a "sunscreen", protecting cells from high-light damage by absorbing blue-green and UV light, thereby protecting the tissues from photoinhibition, or high-light stress. In addition to their role as light-attenuators, anthocyanins also act as powerful antioxidants.

Anthocyanins belong to the flavonoid group of polyphenols. They have a C₆C₃C₆-skeleton typical of flavonoids. Anthocyanins are glycosylated polyhydroxy and polymethoxy derivatives of 2-phenylbenzopyrylium cation, i.e. the flavylium cation. The main part of anthocyanins is its aglycone, the flavylium cation, which contains conjugated double bonds responsible for absorption of light around 500 nm causing the pigments to appear red to human eye. The aglycones are called anthocyanidins, which are usually penta-substituted (3,5,7,3',4') or hexa-substituted (3,5,7,3',4',5'). At least 22 different anthocyanidins are known today, but only six of them are significant and most common from food point of view. The most important anthocyanidins are pelargonidin, cyanidin, peonidin, delphinidin, malvidin, and petunidin. These aglycones differ in the number of hydroxyl and methoxyl groups in the B-ring of the flavylium cation.

Plants rich in anthocyanins are *Vaccinium* species, such as blueberry, cranberry, and bilberry, *Rubus* berries including black raspberry, red raspberry, and blackberry, blackcurrant, cherry, eggplant peel, black rice, Concord grape, muscadine grape, red cabbage and red-fleshed peaches.

Nature, traditional agriculture, and plant breeding have produced various uncommon crops containing anthocyanins, including blue- or red-flesh potatoes and purple or red broccoli, cabbage, cauliflower, carrots, and corn. Tomatoes have been bred conventionally for high anthocyanin content by crossing wild relatives with the common tomato to transfer a gene called the anthocyanin fruit tomato ("aft") gene into a larger and more palatable fruit. Tomatoes have also been genetically modified with transcription factors from snapdragons to produce high levels of anthocyanins in the fruits.

High levels of anthocyanins are found in, for instance, juices, purees, jam and fruit preps made from the fruits and vegetables mentioned earlier. Anthocyanin-rich extracts are commercially available and are used as natural colorings and/or anti-oxidants. Beverages containing appreciable levels of anthocyanins are also known. Anthocyanin-rich plant extracts have been added to e.g. fruit flavored mineral waters to impart color thereto and/or to enhance the nutritional value of the product.

US 4,376,126 describes a yoghurt beverage that comprises about 89% of a yoghurt milk product and, optionally, fruit juice, fruit essence, or fruit concentrate. Example IV describes the preparation of a yogurt beverage that contains raspberry essence.

WO 96/026649 describes drink composition comprising a gelatinised starch and an intense sweetener. WO ' 649 mentions the option of incorporating into the drink composition a juice extracted from fresh orange, blackcurrant, peach, raspberry, strawberry or apple fruits, or a mixture of two or more thereof. It also mentions that as an acidulant malic acid, citric acid or lactic acid, or a mixture of two or more thereof may be applied in the drink compostion. The use of carotene or anthocyanin, or a mixture thereof as a colorant is also mentioned. WO '649 describes a soft fruit drink containing: 1.4% (w/v) gelatinised starch; 8.4% (w/v) sugar; 1.5% (v/v/) guava fruit juice concentrate; 0.35% (w/v) citric acid; 0.02% (w/v) anthocynin; 1,5% (v/v) guava fruit flavor and water.

WO 2005/044025 describes an alcohol free beverage having a pH value between 2.5 and 5.5 and comprising:
- a concentrated fruit extract, selective from a group, consisting of at least one of, or a combination thereof malic acid, tartaric acid and/or citric acid;
- grape aroma;
- Verjuice; and
- water.

The fruit concentrate can be an extract of one of, or a combination thereof of fruit concentrate is ruby cabernet, orange, blackcurrant, peach, raspberry, strawberry, apple, pear, grapefruit, passionfruit, pineapple, guava, grape, mango or including a mixture of two or more thereof. It is mentioned that a colorant may be included in the form of carotene, anthocyanin or any other natural or artificial coloring or a mixture thereof. The option of adding an acidulant selected from malic acid, citric acid, lactic acid and mixtures thereof is mentioned in WO '025.

US 2011/244038 describes a method for preparing a stabilized anthocyanin-containing berry powder having antioxidant and anti-inflammatory activity, comprising:
- physically disrupting a quantity of anthocyanin-containing berries;
- exposing the disrupted berries to an acidic solvent composition having a pH of from about 1 to about 3;
- adding an effective amount of a cryoprotectant; and
- forming the stabilized anthocyanin-containing berry extract into a berry powder having a stabilized anthocyanin content.

The preferred solvent composition comprises a lower alcohol and at least one acid. The at least one acid may be selected from the group consisting of hydrochloric acid, acetic acid, citric acid, lactic acid, trifluoroacetic acid, aspartic acid, glutamic acid, a sulfur-containing acid, sulfonic acid, formic acid, phosphoric acid, maleic acid, and combinations thereof.

Liu Zhiming et al. (Black rice optimization of extraction of red pigment and stability in lactic acid, Acadamic Periodical of Farm Products Processing (2005), 5:20-25,) describe a study in which the colour stability of black rice colour extracts was investigated at different pH (pH 1.5-5.0), using lactic acid as an acidulant. The authors conclude that the colour stability of these extracts is inversely related to pH.

Maarit Rein (Copigmentation reactions and color stability of berry anthocyanins, thesis, University of Helsinki, Department of Applied Chemistry and Microbiology, Food Chemistry Division (2005)). In paragraph 2.2 it is observed that anthocyanins are highly unstable molecules in food matrix and that the color stability of anthocyanins is strongly affected by pH, solvents, temperature, anthocyanin concentration and structure, oxygen, light, enzymes, and other accompanying substances. The author reports that berry anthocyanin colors were successfully improved by phenolic acid and natural plant extract addition.

Murat Gizir et al. (Pressurized acidified water extraction of black carrot [Daucus carota ssp. Sativus var. atrorubens Alef.] anthocyanins, Eur Food Res Technol (2008) 226:363-370) describes the pressurized extraction of 0.05 g of dried pieces of black carrot with 5-10 ml of an aqueous lactic acid solution (0.2 M).

US 8,158,183 describes a beverage product comprising:
- water;
- a color derived from at least one natural source, such as anthocyanins; and
- a compound in an effective amount to inhibit fading of the color derived from at least one natural source, the compound comprising an alpha,beta-unsaturated dicarboxylic acid.

The US patent teaches to employ the alpha,beta-unsaturated dicarboxylic acid in a concentration of between about 30 ppm and 1000 ppm.

US2004/0161496 describes fruit-based beverages fortified with calcium by adding an inorganic calcium salt and an organic calcium salt.

Saigusa et al., Food Science and Technology Research, vol. 13, no.1, 1 January 2007, p23-27 describes the development of alcoholic beverages produced from raw purple-fleshed sweet potato cultivar comprising anthocyanin. The anthocyanin content can be maintained by pH control with lactic or citric acid.

The instability of anthocyanins in beverage products poses a problem as it leads to undesirable fluctuations in color and nutritional properties of these products, especially if they contain appreciable levels of these anthocyanins.

### SUMMARY OF THE INVENTION

The inventors have discovered that the colour stability of beverages containing appreciable levels of anthocyanin-rich juice can be improved substantially by incorporating a sufficient amount of lactic acid. As shown in the Examples, lactic acid is more effective in preventing the occurrence of colour changes in such beverages than citric acid.

Thus, one aspect of the invention relates to a method of preparing a beverage product having a pH of less than 5.0 and having the following *Lab* space colour coordinate values: 20≤L*≤95; a*≥0; b*≥-10, said method comprising combining a juice component, a lactic acid component, water and optionally one or more other food-grade ingredients, wherein:
- the juice component is applied in a concentration of 0.05-99% by weight of the beverage product, said juice component providing 0.1-50 g monosaccharides per liter of beverage product and at least 10 mg anthocyanins per liter of beverage product; and
- the lactic acid component is applied in a concentration that provides 0.05-20 g lactic acid per liter of beverage product;
wherein the juice component is obtained from one of more of the following fruits or roots: fruit from a plant species belonging to the genus *Vaccinium*, fruit from a plant species belonging to the genus *Sambucus*; fruit from a plant species belonging to the genus *Rubus*; aronia; elderberry; red grape, blackcurrant; cherry; strawberry, Amazonian palmberry; açaí; red-fleshed peaches; and black carrot (*Daucus carota*); and wherein the lactic acid component comprises lactic acid or lactic acid and a precursor of lactic acid.

The benefits of the present invention may, for instance, be realized in beverage products that derive most of their colour from an anthocyanin-rich juice component, e.g. a juice obtained from a fruit or vegetable that contains an appreciable amount of anthocyanins. These anthocyanin-rich juice components typically contain a significant amount of monosaccharide, notably fructose and/or glucose.

The invention further provides a beverage product comprising a juice component obtained from one of more of the following fruits or roots: fruit from a plant species belonging to the genus Vaccinium, fruit from a plant species belonging to the genus Sambucus; fruit from a plant species belonging to the genus Rubus; aronia; elderberry; red grape, blackcurrant; cherry; strawberry; Amazonian palmberry; açaí; red-fleshed peaches; and black carrot (Daucus carota), said beverage product having a water content of at least 80 wt.% and a pH of less than 5.0, said beverage product containing:
- 0.1-50 g/l monosaccharides;
- at least 10 mg/l of anthocyanins;
- 0.05-20 g/l lactic acid; and
- optional other food-grade ingredients;
wherein the beverage product has the following *Lab* colour space coordinate values: 20≤L*≤95; a*≥0; b*≥-10.

### DETAILED DESCRIPTION OF THE INVENTION

Accordingly, one aspect of the present invention and disclosures relates to a method of preparing a beverage product having a pH of less than 5.0 and having the following *Lab* colour space coordinate values: 20≤L*≤95; a*≥0; b*≥-10, said method comprising combining a juice component, a lactic acid component, water and optionally one or more other food-grade ingredients, wherein:
- the juice component is applied in a concentration of 0.05-99% by weight of the beverage product, said juice component providing 0.1-50 g monosaccharides per liter of beverage product and at least 10 mg anthocyanins per liter of beverage product; and
- the lactic acid component is applied in a concentration that provides 0.05-20 g lactic acid per liter of beverage product.
wherein the juice component is obtained from one of more of the following fruits or roots: fruit from a plant species belonging to the genus Vaccinium, fruit from a plant species belonging to the genus Sambucus; fruit from a plant species belonging to the genus Rubus; aronia; elderberry; red grape, blackcurrant; cherry; strawberry, Amazonian palmberry; açaí; red-fleshed peaches; and black carrot (Daucus carota); and wherein the lactic acid component comprises lactic acid or lactic acid and a precursor of lactic acid.

The term "juice component" as used herein, unless indicated otherwise, refers to a liquid that has been isolated from a plant material, such as a fruit or a vegetable, by mechanically squeezing or macerating the plant material without the application of solvents. The term "juice component" also encompasses concentrates and powders that are obtained by dehydration of the aforementioned liquid.

The term "anthocyanins" as used herein refers to glucosides of anthocyanidins, e.g. 3-glucosides.

The term "anthocyanidins" as used herein refers to compounds that are based on the flavylium cation. The phenyl group at the 2-position of the flavylium cation can carry different substituents. The positive charge of anthocyanidins differentiates them from other flavonoids.

The term "lactic acid component" as used herein refers to an ingredient that contains at least 10% lactic acid equivalent by weight of dry matter. The lactic acid component of the present invention contains lactic acid and/or a precursor of lactic acid. Examples of suitable lactic acid precursors include lactide, lactic acid oligomers and salts of lactic acid. The amount in which a lactic acid precursor is employed is expressed in lactic acid equivalents. These lactic acid equivalents correspond to the maximum amount of lactic acid that can be generated by said lactic acid precursor.

The term "lactic acid" as used herein, unless indicated otherwise, refers to the dissociated as well as the protonated form of lactic acid (2-hydroxypropanoic acid) or to a water-soluble salt of lactic acid. A lactic acid salt is considered to be water soluble if it has a solubility in distilled water of 20°C of at least 1 g/l. Preferably, the lactic acid salt has water solubility of at least 10 g/l.

Whenever reference is made herein to Lab space colour values what is meant are CIE L*a*b* (CIELAB) space values. CIELAB is the most complete colour space. It describes all the colours visible to the human eye and was created to serve as a device independent model to be used as a reference. The three coordinates of CIELAB represent the lightness of the colour (L* = 0 yields black and L* = 100 indicates diffuse white; specular white may be higher), its position between red/magenta and green (a*, negative values indicate green while positive values indicate magenta) and its position between yellow and blue (b*, negative values indicate blue and positive values indicate yellow).

The juice component employed in the present process preferably is a strongly coloured juice component as evidenced by a *Lab* colour space L* value of less than 50; a *Lab* colour space a* value of at least 25; and a *Lab* colour space b* value of at least -10. Even more preferably, the *Lab* colour space L* value of the juice component is less than 40. In accordance with another preferred embodiment *Lab* colour space b* value of the juice component is at least 10.

The present method advantageously employs a juice component that is rich in monosaccharides such as glucose and fructose. Typically, the juice component contains at least 5% monosaccharides, more preferably at least 8 wt.% monosaccharides, even more preferably at least 30 wt. % monosaccharides and most preferably at 50-80 wt.% monosaccharides. Expressed differently, the juice component typically contains at least 40% monosaccharides by weight of dry matter, most preferably at least 60% by weight of dry matter.

The juice component employed in the present method preferably contains an appreciable amount of anthocyanins. Typically, the juice component contains at least 0.1% anthocyanins by weight of dry matter, more preferably at least 0.5% anthocyanins by weight of dry matter% and most preferably 1-40% anthocyanins by weight of dry matter.

The juice component is advantageously applied in a concentration providing at least 15 mg anthocyanins per liter of beverage product, more preferably 20-40,000 mg anthocyanins per liter of beverage product and most preferably 50-5,000 mg anthocyanins per liter of beverage product.

The anthocyanins in the juice component preferably comprise an anthocyanidin residue selected from the group of aurantinidin, cyanidin, delphinidin, europindin, luteolinidin, pelargonidin, malvidin, peonidin, petunidin and rosinidin. Even more preferably, the anthocyanidin residue is selected from the group of cyanidin, delphinidin, pelargonidin, malvidin, peonidin, petunidin.

According to another preferred embodiment, the juice component is applied in a concentration providing 0.2-15 g monosaccharides per liter of beverage product, more preferably 0.4-10 g monosaccharides per liter of beverage product and most preferably 0.5-7 g monosaccharides per liter of beverage product.

The juice component may suitably take the form of a liquid, a paste or a powder. Most preferably, the juice component employed is a liquid, e.g. a viscous liquid.

The water content of the juice component typically lies in the range of 15-90 wt.%, more preferably in the range of 20-75 wt.% and most preferably in the range of 25-50 wt.%.

According to a particularly preferred embodiment, the juice component is a juice concentrate, more particularly a juice concentrate having a concentration in the range of 40-80 °Bx, most preferably in the range of 50-75 °Bx.

The juice component is preferably applied in a concentration of 0.07-50%, more preferably of 0.08-10% and most preferably of 0.1-1.0% by weight of the beverage product.

The juice component that is employed in the present method is obtained from one or more of the following fruits or roots: fruit from a plant species belonging to the genus *Vaccinium;* fruit from a plant species belonging to the genus *Sambucus;* fruit from a plant species belonging to the genus *Rubus;* aronia; red grapes; blackcurrant; cherry; strawberry; Amazonian palmberry; açaí; red-fleshed peaches; and black carrot (*Daucus carota*). Even more preferably, the juice component is obtained from one or more of the following fruits or roots: fruit from a plant species belonging to the genus *Rubus;* aronia; elderberry; strawberry; red grape; blackcurrant; cherry; and black carrot. Examples of fruit belonging to the genus *Rubus* include blackberry and bramble.

The lactic acid component employed in the present method typically contains at least 10 wt.%, more preferably at least 45 wt.% and most preferably at least 75 wt.% of lactic acid equivalents. Preferably, the lactic acid component is a liquid, powder or a paste. Most preferably, the lactic acid component is a liquid, especially an aqueous liquid.

The lactic acid component is typically employed in the present method to provide.0.08-10 g lactic acid per liter of beverage product. More preferably, the lactic acid component provides 0.1-5 g lactic acid per liter of beverage product and most preferably 0.2-2.5 g lactic acid per liter of beverage product.

Unlike the method described in US 8,158,183 the present method preferably does not comprise the addition of an alpha,beta-unsaturated dicarboxylic acid in an amount sufficient to provide at least 30 ppm of said acid in the beverage product. More preferably, the method does not comprise addition of the latter acid in an amount sufficient to provide at least 20 ppm, even more preferably at least 10 ppm of said acid. Most preferably, the present method does not comprise the addition of an alpha,beta-unsaturated dicarboxylic acid.

In accordance with another preferred embodiment, the present method does not comprise the addition of a combination of maleic anhydride and lactic acid.

According to a particularly preferred embodiment, the present method yields a beverage product as defined below.

A further aspect of the present invention relates to a beverage product comprising a juice component obtained from one of more of the following fruits or roots: fruit from a plant species belonging to the genus Vaccinium, fruit from a plant species belonging to the genus Sambucus; fruit from a plant species belonging to the genus Rubus; aronia; elderberry; red grape, blackcurrant; cherry; strawberry; Amazonian palmberry, açaí; red-fleshed peaches; and black carrot (Daucus carota), said beverage product having a water content of at least 80 wt.% and a pH of less than 5.0, said beverage product containing:
- 0.1-50 g/l monosaccharides;
- at least 10 mg/l of anthocyanins;
- 0.05-20 g/l lactic acid; and
- optional other food-grade ingredients;
   wherein the beverage product has the following *Lab* colour space coordinate values: 20≤L*≤95; a*≥0; b*≥-10.

The aforementioned beverage product is advantageously obtained by a method as defined herein before.

According to a particularly preferred embodiment, the beverage product has a Lab colour space L* value in the range of 40-92, more preferably in the range of 50-90.

In accordance with another preferred embodiment the product has a Lab colour space a* value of at least 10 and a Lab colour space b* value of at least 0.

The beverage product typically contains at least 15 mg/l of anthocyanins, more preferably 20-40,000 mg/l anthocyanins and most preferably 50-5,000 mg/l of anthocyanins.

The anthocyanins in the beverage product preferably comprise an anthocyanidin residue selected from the group of aurantinidin, cyanidin, delphinidin, europindin, luteolinidin, pelargonidin, malvidin, peonidin, petunidin and rosinidin. Even more preferably, the anthocyanidin residue is selected from the group of cyanidin, delphinidin, pelargonidin, malvidin, peonidin, petunidin.

The monosaccharide content of the beverage product typically lies within the range of 0.2-15 g/l, more preferably within the range of 0.4-10 g/l and most preferably within the range of 0.5-7 g/l.

The lactic acid content of the beverage product of advantageously lies within the range of 0.08-10 g/l. Even more preferably, the lactic acid content is in the range of 0.1-5 g/l, most preferably of 0.2-2.5 g/l.

The pH of the beverage product typically lies within the range of 2.0 to 4.7, more preferably of 2.5 to 4.5 and most preferably of 3.0 to 4.0.

Besides the continuous aqueous phase, the beverage product of the present invention may suitably contain a dispersed phase in the form of e.g. oil droplets and/or particulate matter (e.g. pieces of fruit or vegetable). Preferably, the beverage product contains at least 80 wt.%, more preferably at least 90 wt.% and most preferably at least 95 wt.% of a continuous aqueous phase.

The beverage product of the present invention typically contains at least 85 wt.% water. More preferably, the product contains at least 88 wt.% water. Most preferably, the product contains at least 90 wt.% water.

The beverage product according to the latter embodiment typically contains not more than a limited amount of citric acid. Preferably, the product contains 0-5 g/l citric acid, more preferably not more than 2.5 g/l citric acid. Most preferably the product contains not more than 1 g/l citric acid.

Typically, the beverage product contains no citric acid or it contains citric acid in a weight ratio of citric acid to lactic acid of less than 3:1, more preferably of less than 1:1 and most preferably of less than 1:3.

Unlike the beverage products described in US 8,158,183 the beverage product of the present invention preferably contains less than 30 ppm, more preferably less than 20 ppm and most preferably less than 10 ppm of an alpha,beta-unsaturated dicarboxylic acid.

The dairy protein content of the present product typically does not exceed 5%, more preferably it does not exceed 2% by weight of dry matter. Calculated on total product, the dairy protein content of the beverage product typically does not exceed 20 g/l. More preferably, said dairy protein content does not exceed 10 g/l, even more preferably it does not exceed 5 g/l. Most preferably, the present product does not contain dairy protein.

According to another preferred embodiment the beverage product contains less than 5%, more preferably less than 2% non-fruit protein by weight of dry matter. Here "non-fruit protein" refers to protein that does not originate from fruit, such as dairy proteins, animal proteins and vegetable proteins.

The beverage product of the present invention preferably is not a product that has been fermented by lactic acid bacteria.

Stability of anthocyanins in aqueous environment is dependent on various factors including exposure to light. Especially exposure to light accelerates the degradation of anthocyanins. The inventors have found that lactic acid is very effective in retarding light-induced degradation of anthocyanins. Consequently, lactic is advantageously employed to stabilize anthocyanins that are contained in an beverage product that is contained in a transparent container.

If the beverage product is packaged in a transparent container the color of the composition can be assessed from the outside with the naked eye. The present invention offers the advantage that it enables beverage products containing appreciable levels of anthocyanins to be packaged in transparent containers as visible color change due to anthocyanin degradation is effectively minimized by the use of lactic acid.

Yet another aspect of the present invention relates to the use of lactic acid to improve the stability of anthocyanins in beverage products, notably beverage products as described herein before. This particular use typically involves the incorporation of lactic acid in said beverage products in the form of lactic acid and/or in the form of a lactic acid precursor that is readily converted into lactic acid when it is incorporated into the beverage product.

The invention is further illustrated by means of the following non-limiting examples.

### EXAMPLES

### Example 1

Experiments were conducted to evaluate the impact of lactic acid versus citric acid on the color stability of beverages that had been colored with fruit/vegetable concentrates.

The beverages tested were prepared in accordance with the recipes shown in Table 1.

**Table 1**

| | Wt.% | | | | | |
|---|---|---|---|---|---|---|
| | 1A | 1B | 2A | 2B | 3A | 3B |
| Purple elderberry juice concentrate ¹ | 0.5 | 0.5 | | | | |
| Black carrot juice concentrate ² | | | 0.5 | 0.5 | | |
| Aronia juice concentrate ³ | | | | | 0.3 | 0.3 |
| Potassium sorbate | 0.03 | 0.03 | 0.03 | 0.03 | 0.03 | 0.03 |
| Lactic acid | 0.139 | | 0.181 | | 0.113 | |
| Citric acid | | 0.134 | | 0.171 | | 0.108 |
| Demi water | Remainder | | | | | |

| | | | | | | |
|---|---|---|---|---|---|---|
| ¹ Clarified R=65, chilled. Colour (single strength): 65-90. Supplier: SVZ, Etten-Leur, the Netherlands ² Clarified, EV4, frozen. Colour 3.8-4.3. Supplier: SVZ, Etten-Leur, the Netherlands ³ Clarified R=65, frozen. Colour (single strength): 100-168. Supplier: SVZ, Etten-Leur, the Netherlands | | | | | | |

Additional information about the materials used:
- Lactic acid, PURAC FIT Plus 80 (80% w/v aqueous solution)
- Citric acid, 99% pure anhydrous

The beverage samples were prepared using the following procedure::
1. Add the juice concentrate and the potassium sorbate to demi-water.
2. Measure pH
3. Adjust pH to 7.0 with 1 M KOH
4. Adjust pH to 3.5 by adding a freshly made solution (10%) of citric acid or lactic acid
5. Fill 30 ml clear glass bottles with the solutions.
6. Pasteurize samples by heating to 80°C for 10 minutes
7. Wrap the samples in brown bottles with tinfoil

The samples so obtained were stored for 4 weeks at 20 °C under artificial light equivalent of D65 /ID 65.

The color of the samples was measured directly after preparation and after 1, 2, 3 and 4 weeks

Color was measured as L*a*b* color space using a Minolta spectrophotometer CM-3500d and the software package SpectraMagic v3.6. Transmission was measured using 1 cm cuvettes. The following settings of the spectrophotometer were used: measured value is average over 3 flashes; specular component: included; lens position = large; 10° Standard Observer; Illuminants: Daylight 6500° Kelvin.

In the L*a*b* colour space, color difference can be expressed as a single numerical value, ΔE*ab, which indicates the size of the color difference but not in what way the colors are different. ΔE*ab is defined by the following equation: ΔE*ab = √((ΔL*)²+(Δa*)²+(Δb*)²). In general a color difference of ΔE*ab > 1, is visible for human eye.

The results so obtained are depicted in Table 2.

**Table 2**

| Storage time | ΔE*ab | | | | | |
|---|---|---|---|---|---|---|
| | 1A | 1B | 2A | 2B | 3A | 3B |
| 1 week | 1.37 | 3.05 | 1.51 | 2.89 | 3.25 | 3.71 |
| 2 weeks | 3.25 | 5.89 | 3.23 | 6.20 | 6.24 | 7.63 |
| 3 weeks | 4.56 | 7.71 | 5.26 | 8.23 | 7.80 | 10.93 |
| 4 weeks | 7.86 | 10.93 | 6.70 | 11.40 | 11.15 | 13.94 |

These results show that color changes observed in the samples containing lactic acid was substantially less pronounced than in the samples containing citric acid.

### Example 2

The experiments described in Example 1 were repeated except that this time the samples were not pasteurized.

The results obtained are depicted in Table 3.

**Table 3**

| Storage time | ΔE* ab | | | | | |
|---|---|---|---|---|---|---|
| | 1A | 1B | 2A | 2B | 3A | 3B |
| 1 week | 4.10 | 6.12 | 1.42 | 2.70 | 4.76 | 5.07 |
| 2 weeks | 6.16 | 9.56 | 3.06 | 6.31 | 7.99 | 9.72 |
| 3 weeks | 7.62 | 12.91 | 4.08 | 8.65 | 10.57 | 12.85 |
| 4 weeks | 10.49 | 14.83 | 5.90 | 11.11 | 12.66 | 16.39 |

Again, the results show that color changes observed in the samples containing lactic acid was substantially less pronounced than in the samples containing citric acid.

### Example 3

The experiments described in Example 1 were repeated except that this time the pasteurized beverages were filled in brown bottles that were wrapped in tinfoil to ensure that no light exposure occurred during the storage period. The results obtained are shown in Table 4.

**Table 4**

| Storage time | ΔE* ab | | | | | |
|---|---|---|---|---|---|---|
| | 1A | 1B | 2A | 2B | 3A | 3B |
| 1 week | 0.45 | 2.24 | 0.64 | 1.09 | 1.92 | 2.48 |
| 2 weeks | 1.07 | 3.12 | 1.13 | 1.86 | 3.55 | 4.79 |
| 3 weeks | 1.7 | 3.93 | 1.72 | 2.43 | 4.44 | 6.15 |
| 4 weeks | 2.51 | 4.79 | 2.21 | 2.91 | 5.14 | 7.67 |

### Example 4

The experiments described in Example 2 were repeated except that this time the beverages were filled in brown bottles that were wrapped in tinfoil to ensure that no light exposure occurred during the storage period. The results obtained are shown in Table 5.

**Table 5**

| Storage time | ΔE*ab | | | | | |
|---|---|---|---|---|---|---|
| | 1A | 1B | 2A | 2B | 3A | 3B |
| 1 week | 2.82 | 4.14 | 0.67 | 0.83 | 3.09 | 3.44 |
| 2 weeks | 4.11 | 5.79 | 1.10 | 1.70 | 4.99 | 5.98 |
| 3 weeks | 4.99 | 6.97 | 1.51 | 2.17 | 6.26 | 7.58 |
| 4 weeks | 6.01 | 8.20 | 2.26 | 3.18 | 7.35 | 8.93 |

### Example 5

The experiments described in Example 2 were repeated except that this time only purple elderberry juice concentrate and black juice concentrate were used and further in that pH was adjusted to 3.1, 3.5 or 3.9.

Again it was found that color changes observed in the samples containing lactic acid proceeded slower than in the samples containing citric acid.

Furthermore, it was found for both the lactic acid containing samples and the citric acid containing samples that color changing occurred at the highest rate in the samples having a pH of 3.9 and at the lowest rate in the samples having a pH of 3.1.

### Example 6

The colour characteristics of acidified aqueous dilutions of purple elderberry juice concentrate (Clarified R=65, chilled. Colour (single strength): 65-90. Supplier: SVZ, Etten-Leur, the Netherlands) were determined at different concentrations and pH (using lactic acid as acidulant). The colour characteristics were measured using a Minolta spectrophotometer CM-3500d and the software package SpectraMagic v3.6. Transmission was measured using 1 cm cuvettes. The following settings of the spectrophotometer were used: measured value is average over 3 flashes; specular component: included; lens position = large; 10° Standard Observer; Illuminants: Daylight 6500° Kelvin.

The results are depicted in Table 6.

**Table 6**

| **Juice conc.** | **pH** | **L*** | **a*** | **b*** |
|---|---|---|---|---|
| 0.1 wt.% | 2,5 | 82,92 | 20,85 | 2,45 |
| 0.1 wt.% | 4,5 | 84,80 | 11,62 | 3,35 |
| 1 wt.% | 2,5 | 26,06 | 55,96 | 39,43 |
| 1 wt.% | 4,5 | 21,99 | 45,32 | 27,52 |

### Example 7

The colour characteristics of acidified aqueous dilutions of black carrot juice concentrate (Clarified, EV4, frozen. Colour 3.8-4.3. Supplier: SVZ, Etten-Leur, the Netherlands) were determined at different concentrations and pH (using lactic acid as acidulant). The results are depicted in Table 7.

**Table 7**

| **Juice conc.** | **pH** | **L*** | **a*** | **b*** |
|---|---|---|---|---|
| 0,1 wt.% | 2,5 | 85,89 | 29,25 | 0,16 |
| 0,1 wt.% | 4,5 | 93,79 | 15,62 | -3,36 |
| 1 wt.% | 2,5 | 50,87 | 71,43 | 53,24 |
| 1 wt.% | 4,5 | 41,58 | 64,13 | 8,19 |

### Example 8

The colour characteristics of acidified aqueous dilutions of aronia juice concentrate (Clarified R=65, frozen. Colour (single strength): 100-168. Supplier: SVZ, Etten-Leur, the Netherlands) were determined at different concentrations and pH (using lactic acid as acidulant). The results are depicted in Table 8.

**Table 8**

| **Juice conc.** | **pH** | **L*** | **a*** | **b*** |
|---|---|---|---|---|
| 0,1 wt.% | 2,5 | 89,71 | 21,55 | 3,50 |
| 0,1 wt.% | 4,5 | 96,80 | 3,47 | 0,88 |
| 1 wt.% | 2,5 | 54,68 | 67,35 | 54,47 |
| 1 wt.% | 4,5 | 70,53 | 30,65 | 6,27 |

## Claims

1. A method of preparing a beverage product having a pH of less than 5.0 and having the following *Lab* colour space coordinate values: 20≤L*≤95; a*≥0; b*≥-10, said method comprising combining a juice component, a lactic acid component, water and optionally one or more other food-grade ingredients, wherein:
a. the juice component is applied in a concentration of 0.05-99% by weight of the beverage product, said juice component providing 0.1-50 g monosaccharides per liter of beverage product and at least 10 mg anthocyanins per liter of beverage product; and
b. the lactic acid component is applied in a concentration that provides 0.05-20 g lactic acid per liter of beverage product;
wherein the juice component is obtained from one of more of the following fruits or roots: fruit from a plant species belonging to the genus *Vaccinium,* fruit from a plant species belonging to the genus *Sambucus;* fruit from a plant species belonging to the genus *Rubus*; aronia; elderberry; red grape, blackcurrant; cherry; strawberry; Amazonian palmberry; açaí; red-fleshed peaches; and black carrot (*Daucus carota*); and
wherein the lactic acid component comprises lactic acid or lactic acid and a precursor of lactic acid.

2. Method according to claim1, wherein the juice component has a *Lab* colour space L* value of less than 50; a *Lab* colour space a* value of at least 25; and a *Lab* colour space b* value of at least -10.

3. Method according to claim 1 or 2, wherein the juice component contains at least 40% monosaccharides by weight of dry matter.

4. Method according to any one of the preceding claims, wherein the juice component contains at least 0.1% anthocyanins by weight of dry matter.

5. Method according to any one of the preceding claims, wherein the lactic acid component contains at least 15% lactic acid by weight of dry matter.

6. Method according to any one of the preceding claims, wherein the juice component is a concentrated juice containing at least 30 wt.% monosacharides.

7. A beverage product comprising a juice component obtained from one of more of the following fruits or roots: fruit from a plant species belonging to the genus *Vaccinium,* fruit from a plant species belonging to the genus *Sambucus;* fruit from a plant species belonging to the genus *Rubus;* aronia; elderberry; red grape, blackcurrant; cherry; strawberry; Amazonian palmberry; açaí; red-fleshed peaches; and black carrot (*Daucus carota*), said beverage product having a water content of at least 80 wt.% and a pH of less than 5.0, said beverage product containing:
• 0.1-50 g/l monosaccharides;
• at least 10 mg/l of anthocyanins;
• 0.05-20 g/l lactic acid; and
• optional other food-grade ingredients;
wherein the beverage product has the following *Lab* colour space coordinate values: 20≤L*≤95; a*≥0; b*≥-10.

8. Beverage product according to claim 7, wherein the product has a *Lab* colour space L* value in the range of 40-92, preferably in the range of 50-90.

9. Beverage product according to claim 7 or 8, wherein the product has a *Lab* colour space a* value of at least 10 and a *Lab* colour space b* value of at least 0.

10. Beverage product according to any one of claims 7-9, wherein the product contains 20-40,000 mg/l of anthocyanins.

11. Beverage product according to any one of claims 7-10, wherein the product contains 0.1-10 g/l lactic acid.

12. Beverage product according to any one of claims 7-11, wherein the product is contained in a transparent container.

13. Beverage product according to any one of claims 7-12, wherein the product is obtained by a method according to any one of claims 1-6.

14. Use of a lactic acid component, comprising lactic acid or lactic acid and a precursor of lactic acid, to improve the stability of anthocyanins in a beverage product comprising a juice component obtained from one of more of the following fruits or roots: fruit from a plant species belonging to the genus *Vaccinium,* fruit from a plant species belonging to the genus *Sambucus;* fruit from a plant species belonging to the genus *Rubus*; aronia; elderberry; red grape, blackcurrant; cherry; strawberry; Amazonian palmberry; açaí; red-fleshed peaches; and black carrot (*Daucus carota*).

## Patentansprüche

1. Verfahren zur Herstellung eines Getränkeprodukts mit einem pH-Wert von weniger als 5,0 und aufweisend die folgenden *Lab-*Farbraumkoordinatenwerte: 20≤L*≤95; a*≥0; b*≥-10, das Verfahren umfassend Kombinieren einer Saftkomponente, einer Milchsäurekomponente, Wasser und optional eines oder mehrerer anderer Inhaltsstoffe in Lebensmittelqualität, wobei:
a. die Saftkomponente in einer Konzentration von 0,05-99 Gew.-% des Getränkeprodukts eingesetzt wird, wobei die Saftkomponente 0,1-50 g Monosacharide pro Liter Getränkeprodukt und zumindest 10 mg Anthocyane pro Liter Getränkeprodukt liefert; und
b. die Milchsäurekomponente in einer Konzentration eingesetzt wird, die 0,05-20 g Milchsäure pro Liter Getränkeprodukt liefert;
wobei die Saftkomponente aus einer oder mehreren der folgenden Früchte oder Wurzeln erhalten wird: Früchte von einer Pflanzenart, die zur Gattung *Vaccinium* gehört, Früchte von einer Pflanzenart, die zur Gattung *Sambucus* gehört; Früchte von einer Pflanzenart, die zur Gattung *Rubus* gehört; Aronie; rote Trauben, schwarze Johannesbeere; Kirsche; Erdbeere; Amazonaspalme; Acai; rotfleischige Pfirsiche; und schwarze Karotte (*Daucus carota*); und
wobei die Milchsäurekomponente Milchsäure oder Milchsäure und einen Vorläufer von Milchsäure umfasst.

2. Verfahren nach Anspruch 1, wobei die Saftkomponente aufweist einen *Lab*-Farbraum-L*-Wert von weniger als 50; einen *Lab*-Farbraum-a*-Wert von zumindest 25; und einen *Lab*-Farbraum-b*-Wert von zumindest -10.

3. Verfahren nach Anspruch 1 oder 2, wobei die Saftkomponente zumindest 40 Gew.-% Monosacharide, bezogen auf die Trockenmasse, enthält.

4. Verfahren nach einem der vorstehenden Ansprüche, wobei die Saftkomponente zumindest 0,1 Gew.-% Anthocyane, bezogen auf die Trockenmasse, enthält.

5. Verfahren nach einem der vorstehenden Ansprüche, wobei die Milchsäurekomponente zumindest 15 Gew.-% Milchsäure, bezogen auf die Trockenmasse, enthält.

6. Verfahren nach einem der vorstehenden Ansprüche, wobei die Saftkomponente ein zumindest 30 Gew.-% Monosacharide enthaltender konzentrierter Saft ist.

7. Getränkeprodukt umfassend eine Saftkomponente erhalten aus einem oder mehr der folgenden Früchte oder Wurzeln: Frucht von einer Pflanzenart, die zur Gattung *Vaccinium* gehört, Frucht von einer Pflanzenart, die zur Gattung *Sambucus* gehört; Frucht von einer Pflanzenart, die zur Gattung *Rubus* gehört; Aronie, rote Trauben, schwarze Johannisbeere, Kirsche; Erdbeere; Amazonaspalme; Acai; rotfleischige Pfirsiche; und schwarze Karotte (*Daucus carota*), das Getränkeprodukt aufweisend einen Wassergehalt von zumindest 80 Gew.-% und einen pH von weniger als 5,0, das Getränkeprodukt enthaltend:
• 0,1-50 g/l Monosacharide;
• zumindest 10 mg/l an Anthocyanen;
• 0,05-20 g/l Milchsäure; und
• optional andere Inhaltsstoffe in Lebensmittelqualität;
wobei das Getränkeprodukt aufweist die folgenden *Lab-*Farbraumkoordinatenwerte: 20≤L*≤95; a*≥0; b*≥-10.

8. Getränkeprodukt nach Anspruch 7, wobei das Produkt einen *Lab-*Farbraum-L*-Wert in dem Bereich von 40-92, bevorzugt in dem Bereich von 50-90, aufweist.

9. Getränkeprodukt nach Anspruch 7 oder 8, wobei das Produkt aufweist ein *Lab*-Farbraum-a*-Wert von zumindest 10 und einen *Lab*-Farbraum-b*-Wert von zumindest 0.

10. Getränkeprodukt nach einem der Ansprüche 7 bis 9, wobei das Produkt 20-40.000 mg/l an Anthocyanen enthält.

11. Getränkeprodukt nach einem der Ansprüche 7 bis 10, wobei das Produkt 0,1-10 g/l Milchsäure enthält.

12. Getränkeprodukt nach einem der Ansprüche 7-11, wobei das Produkt in einem transparenten Gefäß enthalten ist.

13. Getränkeprodukt nach einen der Ansprüche 7-12, wobei das Produkt durch ein Verfahren nach einem der Ansprüche 1-6 erhalten wird.

14. Verwendung einer Milchsäurekomponente, umfassend Milchsäure oder Milchsäure und einen Vorläufer von Milchsäure, um zu verbessern die Stabilität von Anthocyanen in einem Getränkeprodukt umfassend eine Saftkomponente erhalten aus einer oder mehreren der folgenden Früchte oder Wurzeln: Frucht von einer Pflanzenart, die zur Gattung *Vaccinium* gehört, Frucht von einer Pflanzenart, die zur Gattung *Sambucus* gehört; Frucht von einer Pflanzenart, die zur Gattung *Rubus* gehört; Aronie; Holunderbeere, rote Trauben, schwarze Johannesbeere, Kirsche; Erdbeere; Amazonaspalme; Acai; rotfleischige Pfirsiche; und schwarze Karotte (*Daucus carota*).

## Revendications

1. Méthode de préparation d'un produit de boisson ayant un pH inférieur à 5,0 et ayant les valeurs de coordonnées d'espace colorimétrique *Lab* suivantes : 20 ≤ L* ≤ 95 ; a* ≥ 0 ; b* ≥ -10, ladite méthode comprenant la combinaison d'un composant de jus, d'un composant d'acide lactique, d'eau et facultativement d'un ou plusieurs autres ingrédients de qualité alimentaire, dans laquelle :
a. le composant de jus est appliqué en une concentration de 0,05 à 99 % en poids du produit de boisson, ledit composant de jus fournissant 0,1 à 50 g de monosaccharides par litre de produit de boisson et au moins 10 mg d'anthocyanines par litre de produit de boisson ; et
b. le composant d'acide lactique est appliqué en une concentration qui fournit 0,05 à 20 g d'acide lactique par litre de boisson ;
dans laquelle le composant de jus est obtenu à partir d'un(e) ou plusieurs des fruits ou racines suivant(e)s : fruit d'une espèce végétale appartenant au genre *Vaccinium,* fruit d'une espèce végétale appartenant au genre *Sambucus* ; fruits d'une espèce végétale appartenant au genre *Rubus* ; aronia ; baie de sureau ; raisin rouge, cassis ; cerise ; fraise ; palmier amazonien ; açai ; pêches à chair rouge ; et carotte noire (*Daucus carota*) ; et
dans laquelle le composant acide lactique comprend de l'acide lactique ou de l'acide lactique et un précurseur d'acide lactique.

2. Méthode selon la revendication 1, dans laquelle le composant de jus a une valeur L*d'espace colorimétrique *Lab* inférieure à 50 ; une valeur a* d'espace colorimétrique *Lab* d'au moins 25 ; et une valeur b* d'espace colorimétrique *Lab* d'au moins -10.

3. Méthode selon la revendication 1 ou 2, dans laquelle le composant de jus contient au moins 40 % de monosaccharides en poids de matière sèche.

4. Méthode selon l'une quelconque des revendications précédentes, dans laquelle le composant de jus contient au moins 0,1 % d'anthocyanines en poids de matière sèche.

5. Méthode selon l'une quelconque des revendications précédentes, dans laquelle le composant d'acide lactique contient au moins 15 % d'acide lactique en poids de matière sèche.

6. Méthode selon l'une quelconque des revendications précédentes, dans laquelle le composant de jus est un jus concentré contenant au moins 30 % en poids de monosacharides.

7. Produit de boisson comprenant un composant de jus obtenu à partir d'un(e) ou plusieurs des fruits ou racines suivant(e)s : fruit d'une espèce végétale appartenant au genre *Vaccinium,* fruit d'une espèce végétale appartenant au genre *Sambucus* ; fruits d'une espèce végétale appartenant au genre *Rubus* ; aronia ; baie de sureau ; raisin rouge, cassis ; cerise ; fraise ; palmier amazonien ; açai ; pêches à chair rouge ; et carotte noire (*Daucus carota*), ledit produit de boisson ayant une teneur en eau d'au moins 80 % en poids et un pH inférieur à 5,0, ledit produit de boisson contenant :
• de 0,1 à 50 g/l de monosaccharides ;
• au moins 10 mg/l d'anthocyanines ;
• de 0,05 à 20 g/l d'acide lactique ; et
• d'autres ingrédients facultatifs de qualité alimentaire ;
dans lequel le produit de boisson a les valeurs de coordonnées d'espace colorimétrique *Lab* suivantes : 20 ≤ L* ≤ 95 ; a* ≥ 0 ; b* ≥ -10.

8. Produit de boisson selon la revendication 7, dans lequel le produit a une valeur L* d'espace colorimétrique *Lab* dans la plage de 40 à 92, de préférence dans la plage de 50 à 90.

9. Produit de boisson selon la revendication 7 ou 8, dans lequel le produit a une valeur a* d'espace colorimétrique *Lab* d'au moins 10 et une valeur b* d'espace colorimétrique *Lab* d'au moins 0.

10. Produit de boisson selon l'une quelconque des revendications 7 à 9, dans lequel le produit contient de 20 à 40 000 mg/l d'anthocyanines.

11. Produit de boisson selon l'une quelconque des revendications 7 à 10, dans lequel le produit contient de 0,1 à 10 g/l d'acide lactique.

12. Produit de boisson selon l'une quelconque des revendications 7 à 11, dans lequel le produit est contenu dans un conteneur transparent.

13. Produit de boisson selon l'une quelconque des revendications 7 à 12, dans lequel le produit est obtenu par une méthode selon l'une quelconque des revendications 1 à 6.

14. Utilisation d'un composant d'acide lactique, comprenant de l'acide lactique ou de l'acide lactique et un précurseur d'acide lactique, pour améliorer la stabilité d'anthocyanines dans un produit de boisson comprenant un composant de jus à partir d'un(e) ou plusieurs des fruits ou racines suivant(e)s : fruit d'une espèce végétale appartenant au genre *Vaccinium,* fruit d'une espèce végétale appartenant au genre *Sambucus* ; fruits d'une espèce végétale appartenant au genre *Rubus* ; aronia ; baie de sureau ; raisin rouge, cassis ; cerise ; fraise ; palmier amazonien ; açai ; pêches à chair rouge ; et carotte noire (*Daucus carota*).
